Europäisches Patentamt

European Patent Office

Office européen des brevets

(19)

(11) **EP 1 292 005 A2**

(12) **EUROPÄISCHE PATENTANMELDUNG**

(43) Veröffentlichungstag:
  **12.03.2003   Patentblatt 2003/11**

(51) Int Cl.⁷: **H02M 3/335**, H02M 1/12

(21) Anmeldenummer: **02020260.2**

(22) Anmeldetag: **10.09.2002**

(84) Benannte Vertragsstaaten:
  **AT BE BG CH CY CZ DE DK EE ES FI FR GB GR
  IE IT LI LU MC NL PT SE SK TR**
  Benannte Erstreckungsstaaten:
  **AL LT LV MK RO SI**

(30) Priorität: **11.09.2001   DE 10144540**

(71) Anmelder: **Infineon Technologies AG
  81669 München (DE)**

(72) Erfinder: **Preller, Peter
  81243 München (DE)**

(74) Vertreter: **Bickel, Michael
  Westphal - Mussgnug & Partner
  Patentanwälte
  Mozartstrasse 8
  80336 München (DE)**

(54) **Spannungswandler**

(57)    Die vorliegende Erfindung betrifft einen Spannungswandler mit einem Speicherkondensator (C1) und einer parallel zu dem Speicherkondensator (C1) geschalteten Reihenschaltung mit einem Halbleiterschalter (T1) und einer Primärspule (L3) eines Übertragers (Tr1). Ein Ausgang einer Gleichrichteranordnung (BR1) ist über eine Drossel (L1) und eine induktiv mit der Primärspule (L3) gekoppelte Hilfsspule (L2) oder über die Primärspule (L3) an den Speicherkondensator (C1) angeschlossen.

FIG 1

EP 1 292 005 A2

**Beschreibung**

Spannungswandler

Die vorliegende Erfindung betrifft einen Spannungswandler bzw. ein Schaltnetzteil, insbesondere ein freischwingendes Schaltnetzteil, gemäß den Merkmalen des Oberbegriffs des Anspruchs 1.

Ein derartiges Schaltnetzteil ist allgemein bekannt und beispielsweise in der DE 199 39 389 A1 beschrieben.

Aufgabe eines derartigen Schaltnetzteils ist es, die an der Primärseite des Transformators über dem Kondensator anliegende Gleichspannung in eine sekundärseitige Ausgangsspannung zur Versorgung einer Last zu wandeln. Die von der Primärseite auf die Sekundärseite übertragene Leistung, und damit die über der Last anliegende Ausgangsspannung, ist dabei abhängig von einer Frequenz, mit welcher der in Reihe zu der Primärspule geschaltete Schalter geöffnet und geschlossen wird, und von der Einschaltdauer, für welche der Schalter nach dem Schließen jeweils geschlossen bleibt. Die Primärspule nimmt bei geschlossenem Schalter Energie von dem Speicherkondensator auf und gibt diese bei anschließend geöffnetem Schalter an die Sekundärspule und üblicherweise über eine der Sekundärspule nachgeschaltete Gleichrichteranordnung an die Last ab. Dabei gilt, dass die übertragene Leistung um so größer ist, je länger der Schalter pro Einschaltvorgang geschlossen bleibt. Zur Ansteuerung des Schalters ist eine Ansteuerschaltung vorgesehen, die den Schalter abhängig von der Ausgangsspannung derart ansteuert, dass die Ausgangsspannung wenigstens annäherungsweise lastunabhängig konstant bleibt. Bei kleiner werdender Last werden dabei die Einschaltdauern des Schalters verkürzt, um die übertragene Leistung zu verringern, und bei größer werdender Last werden die Einschaltdauern verlängert, um die übertragene Leistung zu erhöhen und somit die Ausgangsspannung konstant zu halten. Üblicherweise wird der Schalter frühestens dann wieder eingeschaltet, wenn die Primärspule die in ihr gespeicherte Energie vollständig an die Sekundärseite abgegeben hat.

Bei herkömmlichen Schaltnetzteilen ist der die Eingangsspannung bereitstellende Speicherkondensator direkt an den Brückengleichrichter angeschlossen. Die an dem Kondensator anliegende Spannung entspricht dabei in etwa dem Betrag des Maximalwertes der dem Brückengleichrichter zugeführten Wechselspannung, die insbesondere eine Netzwechselspannung mit einem Effektivwert zwischen 180V und 270V ist. Sobald der Speicherkondensator nach dem Einschalten des Schaltnetzteils aufgeladen ist, fließt nur dann ein Strom über den Brückengleichrichter auf den Speicherkondensator, wenn dessen Spannung bedingt durch die Stromaufnahme der Primärspule unter den Wert der Maximalspannung bzw. der Scheitelspannung abgesunken ist. Einer sinusförmigen Eingangsspannung des Schaltnetzteils steht dabei eine impulsförmige Stromaufnahme mit kurzen Stromspitzen während der Zeitdauern kurz bevor und kurz nachdem die Eingangsspannung den Scheitelwert ereicht gegenüber.

Idealerweise wird bei Schaltnetzteilen mit einer Leistungsaufnahme von mehr als einigen Watt eine Stromaufnahme angestrebt, deren zeitlicher Verlauf dem zeitlichen Verlauf der Eingangsspannung entspricht oder zumindest diesem Verlauf angenähert ist, um zum einen die Blindleistungsaufnahme aus dem Netz und zum anderen mögliche Störabstrahlungen bei kurzen Eingangsstromimpulsen zu reduzieren.

Aus Peter Preller: "Function and Publication of the TDA 16846 IC for Switched Mode Power Supplies", Power Conversion, June 1999 Proceedings, Seiten 401-410, ist es bekannt, den Speicherkondensator über eine Drossel und eine Ladungspumpe an den Speicherkondensator anzuschließen. Aufgabe der Ladungspumpe ist es dabei, das Potential zwischen der Drossel und dem Kondensator periodisch abzusenken, um auf diese Weise einen Stromfluss von dem Brückengleichrichter auf die Drossel auch dann zu ermöglichen, wenn die Spannung über dem Speicherkondensator größer als der Momentanwert des Betrags der Eingangsspannung ist. Die Zeitdauern, während der das Schaltnetzteil Strom aufnimmt, verlängern sich dadurch.

Der vorliegenden Erfindung liegt die Aufgabe zugrunde, ein Schaltnetzteil zur Verfügung zu stellen, bei dem eine Zeitdauer, während der Strom durch das Schaltnetzteil aufgenommen wird, gegenüber solchen Schaltnetzteilen vergrößert ist, bei denen der Speicherkondensator direkt an den Brückengleichrichter angeschlossen ist und das einfach und kostengünstig realisierbar ist.

Dieses Ziel wird durch ein Schaltnetzteil gemäß den Merkmalen des Anspruchs 1 gelöst. Vorteilhafte Ausgestaltungen der Erfindung sind Gegenstand der Unteransprüche.

Der erfindungsgemäße Spannungswandler umfasst eine Gleichrichteranordnung mit Eingangsklemmen zum Anlegen einer Wechselspannung und Ausgangsklemmen zum Bereitstellen einer gleichgerichteten Spannung. Die Gleichrichteranordnung ist insbesondere als Dioden-Brückengleichrichter ausgebildet, dessen gleichgerichtete Spannung bei einer sinusförmigen Eingangsspannung dann einer sinusbetragförmigen Spannung entspricht. Zur Ladungsspeicherung ist eine an die Ausgangsklemmen der Gleichrichteranordnung gekoppelte Ladungsspeicheranordnung vorgesehen, die insbesondere als Kondensator ausgebildet ist. Eine Reihenschaltung mit einem Halbleiterschalter und einer Primärspule eines Übertragers, ist parallel zu der Ladungsspeicheranordnung geschaltet, wobei eine Ansteuerschaltung vorgesehen ist, die den Halbleiterschalter abhängig von einer Ausgangsspannung des Spannungswandlers ansteuert. Zur Bereitstellung dieser Ausgangsspannung für eine an Ausgangsklemmen anschließbare Last ist ein Sekundärstromkreis mit einer Sekundärspule des Übertragers vorhanden wobei vorzugsweise eine weitere Gleichrichteranordnung zwischen die Sekundärspule und die Ausgangsklemmen geschaltet ist.

Erfindungsgemäß ist eine Drossel, an eine der Ausgangsklemmen der Gleichrichteranordnung angeschlossen und über eine induktiv mit der Primärspule gekoppelte Hilfsspule oder über die Primärspule an den Kondensator angeschlossen, um den Kondensator an die Gleichrichteranordnung zu koppeln.

Die induktiv mit der Primärspule gekoppelte Hilfsspule oder die Primärspule, die mit einer Klemme jeweils an die Drossel angeschlossen sind, sorgen dafür, dass während bestimmter Betriebszustände des Spannungswandlers das Potential an dem dem Brückengleichrichter abgewandten Ende der Drossel auf einen reduzierten Wert absinkt, der unter dem Wert der Spannung über dem Speicherkondensator liegt. Bei dem erfindungsgemäßen Schaltnetzteil kann somit bereits dann ein Strom aufgenommen werden, wenn die Ausgangsspannung des Brückengleichrichters größer als diese reduzierte Spannung ist, und nicht erst dann, wenn die Ausgangsspannung größer als die Spannung über dem Speicherkondensator ist. Die Zeitdauern, zu denen das Potential an dem dem Brückengleichrichter abgewandten Anschluss der Drossel bezogen auf die Ein- und Ausschaltzeitpunkte des Schalters reduziert ist, sind abhängig von der speziellen Ausführungsform der Erfindung, das heißt davon, ob die Drossel über die Primärspule oder über die Hilfsspule an den Kondensator angeschlossen ist, und davon, ob die Hilfsspule und die Primärspule denselben oder einen entgegengesetzten Wicklungssinn aufweisen.

Bei einer Ausführungsform der Erfindung, bei der die Drossel über eine Hilfsspule an den Kondensator angeschlossen ist, weisen die Primärspule und die Hilfsspule denselben Wicklungssinn auf, und bei einer anderen Ausführungsform weisen die Primärspule und die Hilfsspule einen entgegengesetzten Wicklungssinn auf.

Der Spannungsabfall über der Primärspule und der Spannungsabfall über der induktiv mit der Primärspule gekoppelten Hilfsspule steht über das Verhältnis der Windungszahlen dieser beiden Spulen zueinander in Beziehung. Da die Spannung über der Hilfsspule der Potentialdifferenz zwischen einem Anschluss des Kondensators und dem dem Brückengleichrichter abgewandten Anschluss der Drossel entspricht, ist über das Verhältnis dieser Windungszahlen unter anderem die Spannung einstellbar, um welche das reduzierte Potential unter dem Potential an dem Speicherkondensator liegt. Dabei gilt, dass eine Stromaufnahme der Drossel bei kleineren Momentanwerten der Ausgangsspannung des Brückengleichrichters einsetzt, wenn die Spannungsdifferenz zwischen der Drossel und dem Speicherkondensator größer wird.

Bei einer Ausführungsform der Erfindung ist vorgesehen, dass die Drossel an den der Primärspule und dem Schalter gemeinsamen Knoten angeschlossen ist, um die Drossel über die Primärspule an den Kondensator anzuschließen. Die Spannungsdifferenz zwischen dem Kondensator und der Drossel entspricht dann der über der Primärspule anliegenden Spannung.

Bei einer weiteren Ausführungsform ist vorgesehen, dass die Primärspule einen Anzapfpunkt aufweist, an den die Drossel angeschlossen ist. Die Spannungsdifferenz zwischen dem Kondensator und der Drossel entspricht dann dem Teil der Spannung über der Primärspule, der zwischen dem Anzapfpunkt und dem Kondensator anliegt.

Es ist ein weiteres Ziel der vorliegenden Erfindung, eine Spulenanordnung zur Verfügung zu stellen, die eine einfache und platzsparende Realisierung der Drossel und des Übertragers mit Primärspule, Sekundärspule und gegebenenfalls Hilfsspule ermöglicht.

Dieses Ziel wird durch eine Spulenanordnung gemäß den Merkmalen des Anspruchs 7 erreicht.

Die Spulenanordnung weist einen Spulenkörper mit einem ersten und zweiten Seitenschenkel und einem dazwischen liegenden Mittenschenkel auf, die mittels eines oberen und unteren Joches miteinander verbunden sind. Dabei ist die Drossel teilweise auf den ersten Seitenschenkel und teilweise auf den zweiten Seitenschenkel gewickelt, wobei die Windungszahlen auf dem ersten und zweiten Seitenschenkel übereinstimmen und die Teilwicklungen auf dem ersten und zweiten Seitenschenkel denselben Wicklungssinn aufweisen. Die Spulen des Übertragers sind auf den Mittelschenkel aufgebracht. Die Aufteilung der Drossel auf den ersten und zweiten Seitenschenkel bewirkt, dass sich die durch diese beiden Teilwicklungen in dem Mittelschenkel induzierten magnetischen Felder gegenseitig aufheben und dass sich die durch den Übertrager in den Wicklungen an den Seitenschenkeln induzierten Ströme gegenseitig aufheben dass der auf dem Mittelschenkel gebildete Übertrager und die auf den Seitenschenkeln gebildete Drossel magnetisch entkoppelt sind.

Die vorliegende Erfindung wir nachfolgend in Ausführungsbeispielen anhand von Figuren näher erläutert. In den Figuren zeigt

Figur 1 ein Schaltbild eines ersten Ausführungsbeispiels eines erfindungsgemäßen Schaltnetzteils, bei welchem eine Drossel über eine Hilfsspule an einen Speicherkondensator angeschlossen ist und eine Primärspule und die Hilfsspule denselben Wicklungssinn aufweisen,

Figur 2 zeitliche Verläufe ausgewählter Spannungen und Ströme bei dem Schaltnetzteil gemäß Figur 1,

Figur 3 ein Schaltbild eines zweiten Ausführungsbeispiels eines erfindungsgemäßen Schaltnetzteils, bei welchem eine Drossel über eine Hilfsspule an einen Speicherkondensator angeschlossen ist und eine Primärspule und die Hilfsspule einen entgegengesetzten Wicklungssinn aufweisen,

Figur 4    zeitliche Verläufe ausgewählter Spannungen und Ströme bei dem Schaltnetzteil gemäß Figur 3,

Figur 5    ein Schaltbild eines dritten Ausführungsbeispiels eines erfindungsgemäßen Schaltnetzteils, bei welchem eine Drossel über eine Primärspule an einen Speicherkondensator angeschlossen ist,

Figur 6    zeitliche Verläufe ausgewählter Spannungen und Ströme bei dem Schaltnetzteil gemäß Figur 5,

Figur 7    ein Schaltbild eines vierten Ausführungsbeispiels eines erfindungsgemäßen Schaltnetzteils, bei welchem eine Drossel über einen Teil der Primärspule zwischen einem Anzapfpunkt und einem Speicherkondensator an den Speicherkondensator angeschlossen ist,

Figur 8    zeitliche Verläufe ausgewählter Spannungen und Ströme bei dem Schaltnetzteil gemäß Figur 7,

Figur 9    Spulenanordnung zur Realisierung der Drossel und des Übertragers bei dem erfindungsgemäßen Spannungswandler,

Figur 10    Schaltbild eines erfindungsgemäßen Spannungswandlers mit einer Spulenanordnung gemäß Figur 9.

In den Figuren bezeichnen, sofern nicht anders angegeben, gleiche Bezugszeichen gleiche Teile mit gleicher Bedeutung.

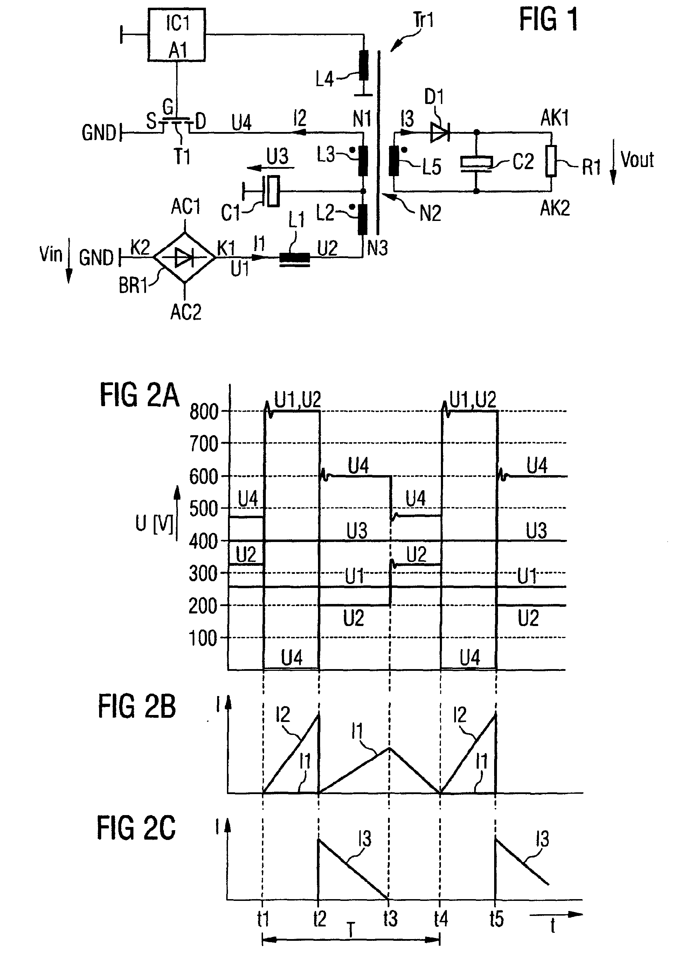

Figur 1 zeigt ein Schaltbild eines erfindungsgemäßen Schaltnetzteils.

Aufgabe des Schaltnetzteils ist es, aus einer Gleichspannung U3 über einem Kondensator C1 eine lastunabhängige Ausgangsspannung Vout zur Versorgung einer Last R1, die in dem Beispiel als ohmscher Widerstand dargestellt ist, zu erzeugen. Das Grundprinzip eines derartigen freischwingenden Schaltnetzteils ist allgemein bekannt und wird im folgenden nur kurz erläutert.

Die Gleichspannung U3 liegt über dem Speicherkondensator C1 an, dessen einer Anschluss an ein Bezugspotential GND angeschlossen ist. Zwischen den anderen Anschluss des Kondensators C1 und Bezugspotential GND, das heißt parallel zu dem Kondensator C1, ist eine Reihenschaltung mit einem Halbleiterschalter T1, der in dem Beispiel als MOS-Transistor T1 ausgebildet ist, und einer Primärspule L3 eines Übertragers Tr1 geschaltet. Die Drain-Source-Strecke des Transistors T1 liegt dabei in Reihe zu der Primärspule. Der Transistor T1 ist angesteuert durch eine Ansteuerschaltung IC1, die mit einer Ausgangsklemme A1 an den Gate-Anschluss G des Transistors angeschlossen ist.

Die Primärspule L3 ist induktiv mit einer Sekundärspule L5 des Übertragers Tr1 gekoppelt, wobei die Sekundärspule in dem Beispiel über eine Gleichrichteranordnung D1, C2 an Ausgangsklemmen AK1, AK2, zwischen denen die Last R1 liegt, angeschlossen ist.

Die Primärspule L3 wird bei leitendem Transistor T1 von einem Strom I2 durchflossen und nimmt Energie von dem Speicherkondensator C1 auf. Bei anschließend sperrendem Transistor T1 wird der Stromfluss durch die Primärspule L3 unterbrochen, in der Sekundärspule L5 wird eine Spannung induziert, die einen Stromfluss I3 durch die Sekundärspule L5 über die Diode D1 auf den Ausgangskondensator C2 hervorruft. Die in der Primärspule L3 bei leitendem Transistor T1 gespeicherte Energie wird somit bei anschließend sperrendem Transistor an die induktiv gekoppelte Sekundärspule L5 abgegeben. Die bei leitendem Transistor T1 in der Primärspule L3 gespeicherte und anschließend an die Sekundärspule abgegebene Energie ist dabei um so größer, je länger der Transistor leitet. Umgekehrt nimmt die in der Primärspule gespeicherte Energie mit kürzer werdenden Ansteuerperioden ab.

Die Ansteuerung des Transistors durch die Ansteuerschaltung IC1 erfolgt abhängig von der Ausgangsspannung Vout derart, dass die von der Primärseite auf die Sekundärseite übertragene Leistung so bemessen ist, dass an der Last nahezu lastunabhängig die gewünschte Ausgangsspannung Vout zur Verfügung steht. Sinkt die Last, was bei gleichbleibender übertragener Leistung zu einem Anstieg der Ausgangsspannung führen würde, werden die Ansteuerperioden des Transistors T1 verkürzt, um die übertragene Leistung zu reduzieren. Umgekehrt werden bei größer werdender Last die Ansteuerperioden verlängert.

Die Information über den Wert der Ausgangsspannung Vout erhält die Ansteuerschaltung IC1 in dem Ausführungsbeispiel über eine induktiv mit der Primärspule L3 und der Sekundärspule L5 gekoppelte Hilfsspule L4, wobei der Hilfsspule L4 in nicht näher dargestellter Weise in der Ansteuerschaltung IC1 eine Gleichrichteranordnung nachgeschaltet ist, an deren Ausgang eine Spannung anliegt, die von der Ausgangsspannung Vout abhängig ist und abhängig von der die Ansteuerperioden des Transistors T1 festgelegt werden. Der Transistor wird dabei frühestens dann wieder eingeschaltet, wenn die Primärspule die gesamte in Ihr gespeicherte Energie an die Sekundärspule abgegeben hat.

Als Ansteuerschaltung IC1 zur Ansteuerung des Transistors T1 eignet sich beispielsweise der integrierte Baustein TDA 16846 der Anmelderin.

Zur Erzeugung der in die Ausgangsspannung Vout gewandelten Spannung U3 weist das Schaltnetzteil eine Gleichrichteranordnung BR1 auf, die in dem Ausführungsbeispiel als Dioden-Brückengleichrichter ausgebildet ist, der Wechselspannungseingänge AC1, AC2 und Spannungsausgänge K1, K2 aufweist. Während des Betriebs liegt an den Eingängen AC1, AC2 eine Wechselspannung Vin an. An den Ausgängen K1, K2 steht dann eine gleichgerichtete Spannung U1 zur Verfügung, wobei die Spannung U1 dem Betrag der Wechselspannung Vin entspricht. Die Eingangsspannung Vin ist vorzugsweise eine sinusförmige Netzspannung mit Effektivwerten zwischen 180V und 270V. Der Kondensator C1 wird bei Einschalten des Netzteils, das heißt bei Anlegen einer Versorgungsspannung Vin an den Gleichrichter BR1 über die Drossel L1 und die Hilfsspule L2 auf den Scheitelwert der anliegenden Wechselspannung Vin bzw. der Spannung U1 aufgeladen.

Der Ausgang K2 des Brückengleichrichters BR1 ist an Bezugspotential angeschlossen. Der Ausgang K1, an dem die Spannung U1 gegen Bezugspotential anliegt, ist über eine Drossel L1 und eine induktiv mit der Primärspule L3 (und der Sekundärspule L5 und der Hilfsspule L4) gekoppelte weitere Hilfsspule L2 an den Kondensator C1 angeschlossen. Der Kondensator C1 liegt somit parallel zu der Reihenschaltung mit der Hilfsspule L2, der Drossel L1 und einer durch den Brückengleichrichter BR1 gebildeten Spannungsquelle für die gleichgerichtete (sinusbetragförmige) Spannung U1.

In den Figuren bezeichnet N1 den der Primärspule L3 und dem Transistor T1 gemeinsamen Knoten, N2 bezeichnet den der Primärspule L3 und der Hilfsspule L2 und dem Kondensator C1 gemeinsamen Knoten und N3 bezeichnet den der Drossel L1 und der Hilfsspule L2 gemeinsamen Knoten.

Aufgabe der Drossel L1 und der Hilfsspule L2 ist es, die Zeitdauer, während der ein Strom I1 in das Schaltnetzteil fließt, gegenüber solchen Netzteilen zu verlängern, bei denen ein Brückengleichrichter direkt an einen Speicherkondensator angeschlossen ist und bei denen nur dann ein Strom aufgenommen wird, wenn der Momentanwert der Ausgangsspannung des Brückengleichrichters größer als die Spannung über dem Speicherkondensator ist.

Bei dem erfindungsgemäßen Schaltnetzteil fließt immer dann ein Strom in die Drossel, wenn eine Spannung U2 bzw. ein Potential U2 an dem Knoten N3 bezogen auf Bezugspotential GND kleiner als der Momentanwert der Spannung U1 am Ausgang des Brückengleichrichters BR1 ist. Das Potential an dem Knoten N3 kann dabei kleiner sein als das Potential U3 an dem Knoten N2 bzw. die Spannung über dem Kondensator C1, wie im folgenden anhand einiger Strom- und Spannungsverläufe in Figur 2 dargestellt ist.

Zum besseren Verständnis der Beziehungen zwischen den einzelnen Spannungen sind in Figur 2a Zahlenwerte für die Spannungen angegeben, wobei von einer Eingangsspannung Vin mit einem Scheitelwert von etwa 400V ausgegangen ist, auf welchen sich die Spannung U3 über dem Kondensator C1 einstellt. Diese Spannung, die durch die Stromzuflüsse von dem Gleichrichter BR1 und Stromabflüsse an die Primärspule L3 beeinflusst wird, kann bei einem großen Kapazitätswert des Kondensators C1, beispielsweise einem Elektrolytkondensator, als annähernd konstant angenommen werden.

Zu einem Zeitpunkt t1 wird der Transistor T1 leitend durch die Ansteuerschaltung IC1 angesteuert. Ein Potential U4 an dem Knoten N1 bzw. eine Spannung U4 über der über der Drain-Source-Strecke D-S des Transistors T1 sinkt dadurch annähernd auf Null ab. Die Spannung U3 über dem Kondensator fällt dann nahezu vollständig über der Primärspule L3 an. Die Primärspule L3 wird, wie in Figur 2b dargestellt, von einem linear ansteigenden Strom I2 durchflossen, wodurch die Primärspule Energie aufnimmt. Ein Strom I3 durch die Sekundärspule ist Null.

Durch die induktive Kopplung der Primärspule L3 mit der Hilfsspule L2 wird in der Hilfsspule L2 eine Spannung induziert, deren Wert über das Verhältnis der Wicklungen dieser beiden Spulen von der über der Primärspule L3 anliegenden Spannung U3-U4 abhängig ist. Für die Spannungsverläufe in Figur 2a wird angenommen, dass die Windungszahlen der Primärspule L3 und der Hilfsspule L2 übereinstimmen. Der Betrag der über der Hilfsspule L2 anliegende Spannung U3-U2 entspricht dann dem Betrag der über der Primärspule anliegenden Spannung U3-U4. Die Primärspule L3 und die Hilfsspule L2 besitzen bei dem Ausführungsbeispiel gemäß Figur 1 denselben Wicklungssinn. Dies bedeutet, dass die Spannung zwischen dem Knoten N2 und dem Knoten N1 über der Primärspule dieselbe Polung aufweist, wie die Spannung zwischen dem Knoten N3 und dem Knoten N2 über der Hilfsspule L2. Da die Spannung über der Primärspule L3 bei leitendem Transistor T1 in etwa der Spannung U3 entspricht, bzw. die Spannung zwischen dem Knoten N1 und dem Knoten N2 dem negativen dieser Spannung U3 entspricht, gilt also:

$$-U3 = U3-U2 => U2 = 2 \cdot U3$$

Das Potential an dem Knoten N3 liegt somit etwa um das Doppelte der Spannung U3 (d.h. etwa 800V) über Bezugspotential GND. Dieser Wert liegt über dem Maximalwert der Spannung U1, der Strom I1 durch die Drossel L1 ist Null, da die Dioden der Gleichrichteranordnung BR1 einen Strom entgegen der in Figur 1 eingezeichneten Richtung verhindern.

Der Transistor T1 sperrt zu einem Zeitpunkt t2. Die Spannung U4 über dem Transistor T1 steigt dann auf einen Wert oberhalb der Spannung U3 an und resultiert aus der Spannung U3 und einer in der Primärspule L3 induzierten Spannung, wobei letztere von dem Verhältnis der Windungszahlen zwischen L3 und L5 und der Ausgangsspannung Vout abhängig ist, während der der Transistor T1 zuvor leitend war. Der Strom I2 durch die Primärspule L3 wird nach dem Sperren des Transistors T1 zu Null. Die in der Primärspule L3 gespeicherte Energie wird auf die Sekundärspule L5 übertragen, was zu einem abrupten Anstieg des Stromes I3 (Figur 2c) durch die Sekundärspule führt. Dieser Strom I3 nimmt mit zunehmender ser Strom I3 nimmt mit zunehmender Entmagnetisierung der Primärspule L3 linear ab.

Wegen der induktiven Kopplung zwischen der Primärspule L3 und der Hilfsspule L2 liegt über der Hilfsspule L2 eine der Spannung über der Primärspule L3 entsprechende Spannung an, das heißt:

$$U4-U3 = U3-U2 => U2 = U3 - (U4-U3)$$

wobei U4-U3 die über der Primärspule L3 anliegende Spannung ist. Dies führt dazu, dass das Potential U2 an dem Knoten N3 um den Wert der über der Primärspule L3 anliegenden Spannung unter dem Wert der Spannung U3 liegt. Bei einem beispielhaften Wert von 600V für U4 und 400V für U3 bedeutet dies einen Spannungswert von 200V für U2.

Die Frequenz, mit der der Transistor T1 leitend und sperrend angesteuert wird, ist wesentlich größer als die Frequenz der Eingangsspannung Vin. Diese beiden Frequenzen können sich um einen Faktor tausend und mehr unterscheiden. Der Wert der Spannung U1 kann daher für viele Perioden der Schaltfrequenz des Transistors T1 als konstant angenommen werden. Für die Darstellung in Figur 2a ist ein Momentanwert dieser Spannung-U1 von 250V herausgegriffen. Diese Spannung U1 ist größer als die Spannung U2 zwischen dem Knoten N3 und Bezugspotential, was zu einem linear ansteigenden Strom I1 durch die Drossel L1 führt. Zu einem Zeitpunkt t3 ist die Sekundärspule stromlos, was dazu führt, dass die Spannung über der Primärspule L3 bzw. die Spannung U4 an dem Knoten N1 absinkt. Wegen der Serienschaltung der Drossel L1 und der Hilfsspule L2 steigt die Spannung U2 zwischen dem Knoten N3 und Bezugspotential GND auf einen Wert an, für den gilt:

$$U2 = U3-(U3-U1)\cdot L2/(L1+L2).$$

In dem dargestellten Beispiel ist diese Spannung größer als die Spannung U1, die Drossel wird dadurch entmagnetisiert, der Strom durch die Drossel L1 sinkt ab.

Die Verläufe der Ströme I3 durch die Sekundärspule L5 und I1 durch die Hilfsspule L2 sind nicht unabhängig voneinander. Bei einem Übertrager gilt, dass die Summe der Ströme multipliziert mit den Wicklungszahlen der jeweiligen Spule unveränderbar ist. Der an der Hilfsspule L3 ansteigende Strom I1 führt somit dazu, dass der Strom I3 durch die Sekundärspule schneller absinkt als dies ohne die Hilfsspule der Fall wäre.

Die Darstellung in Figur 2 stellt nur eine Momentaufnahme der Spannungs- und Stromverhältnisse bei einem Momentanwert der Spannung U1 dar, die zwischen Null und einem Scheitelwert, der in etwa der Spannung U3 entspricht, schwankt. Ist diese Spannung U1 größer als in Figur 2 dargestellt, so steigt der Strom I1 durch die Drossel L1 steiler an. Ist die Spannung U1 kleiner als die Spannung U2 zum Zeitpunkt t2, so fließt auch bei dem erfindungsgemäßen Schaltnetzteil kein Strom I1 in das Netzteil. Gemittelt über eine Periode der Eingangsspannung Vin ist die Zeitdauer, während der bei dem erfindungsgemäßen Schaltnetzteil eine Stromaufnahme stattfindet, größer als bei einem herkömmlichen Netzteil, bei dem nur dann eine Stromaufnahme stattfindet, wenn der Momentanwert des Betrags der Eingangsspannung über den Wert der Spannung an dem Speicherkondensator ansteigt.

Der Transistor T1 wird bei dem Ausführungsbeispiel gemäß Figur 1 dann wieder leitend angesteuert, wenn der Strom durch die Drossel L1 zum Zeitpunkt t4 auf Null abgesunken ist. Die Information über diesen stromlosen Zustand der Drossel L1 erhält die Ansteuerschaltung IC1 von der Hilfsspule L4, die induktiv mit der in Reihe zu der Drossel L1 geschalteten und von dem Drosselstrom I1 durchflossenen Hilfsspule L2 gekoppelt ist.

Zusammenfassend kann bei dem erfindungsgemäßen Netzteil bedingt durch die Hilfsspule L2 eine Stromaufnahme auch dann stattfinden, wenn der Momentanwert der Eingangsspannung U1 kleiner als die über dem Speicherkondensator C1 anliegende Spannung U3 ist. Das erfindungsgemäße Schaltnetzteil nimmt bereits dann Strom auf, wenn der Momentanwert der Spannung U1 größer ist als die Spannung U2, wobei die Spannung U2 bei dem Beispiel gemäß Figur 1 mit dem Sperren des Transistors T1 um den Wert der in der Primärspule L3 induzierten Spannung unter die Spannung U3 über dem Kondensator C1 abfällt.

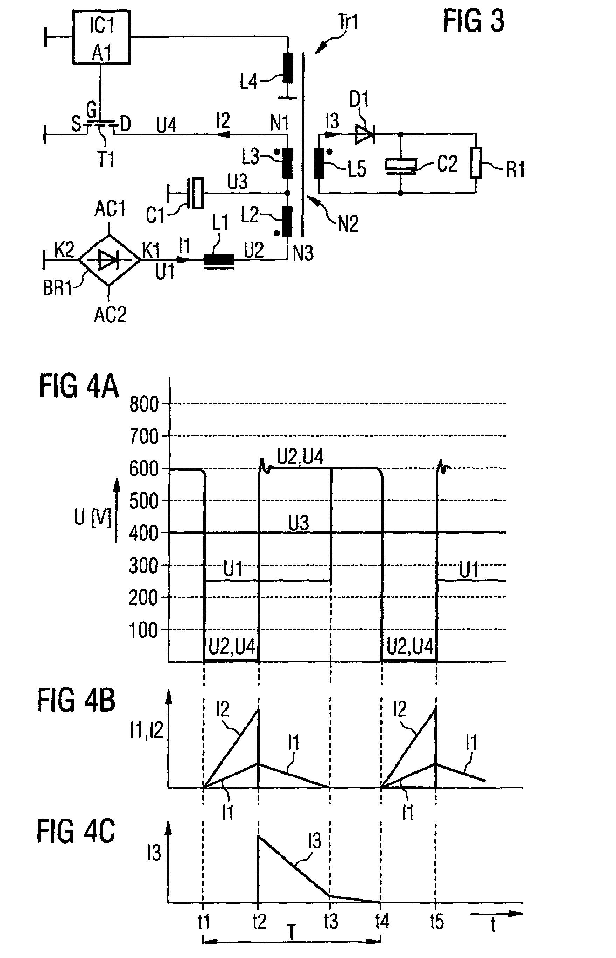

Figur 3 zeigt ein weiteres Ausführungsbeispiel eines erfindungsgemäßen Schaltnetzteils, das sich von dem in Figur 1 dargestellten dadurch unterscheidet, dass die Primärspule L3 und die Hilfsspule L2 einen unterschiedlichen Wicklungssinn aufweisen. Die Polung einer an der Primärspule L3 zwischen dem Knoten N1 und dem Knoten N2 anliegenden Spannung ist dabei entgegengesetzt zu der Polung einer an der Hilfsspule L2 zwischen dem Knoten N2 und dem Knoten N3 anliegenden Spannung. Die Beträge dieser Spannungen stehen über das Verhältnis der Windungszahlen der Primärspule L3 und der Hilfsspule L2 zueinander in Beziehung.

Die Funktionsweise des Netzteils gemäß Figur 3 wird im folgenden anhand der Spannungs- und Stromverläufe in Figur 4 erläutert.

Zunächst wird - wie nicht näher dargestellt ist - der Kondensator C1 bei Einschalten des Netzteils, das heißt bei Anlegen einer Versorgungsspannung Vin an den Gleichrichter BR1 über die Drossel und die Hilfsspule L2 auf den Scheitelwert der anliegenden Wechselspannung Vin bzw. der Spannung U1 aufgeladen.

Zum Zeitpunkt t1 wird der Transistor T1 leitend durch die Ansteuerschaltung IC1 angesteuert. Die Spannung U4 über der Drain-Source-Strecke D-S des Transistors T1 bzw. zwischen dem Knoten N1 und Bezugspotential wird annäherungsweise Null. Über der Primärspule L3 liegt zwischen dem Knoten N2 und dem Knoten N1 die Spannung U3-U4 an, die in etwa der Spannung U3 (in dem Beispiel 400V) entspricht, und die durch die Primärspule L3 einen linear ansteigenden Strom I2 hervorruft.

Durch die induktive Kopplung der Primärspule L3 mit der Hilfsspule L2 liegt zwischen dem Knoten N3 und dem Knoten N2 eine Spannung an, die von der Spannung über der Primärspule L3 abhängig ist und deren Betrag bei gleichen Windungszahlen von Primär- und Hilfsspule L3, L2 dem Betrag der Spannung über der Primärspule L3 entspricht. Wegen des entgegengesetzten Wicklungssinns der Primär- und der Hilfsspule und bei gleichen Windungszahlen gilt:

$$U3 - U4 = U3 - U2 => U2 = U4$$

Das Potential U2 an dem Knoten N3 entspricht bei gleichen Windungszahlen somit dem Potential U4 an dem Knoten N1. Dieses Potential U2 ist kleiner als das Potential bzw. die Spannung U1, für die in Figur 4 wieder ein Momentanwert von etwa 250V dargestellt ist. Ab dem Zeitpunkt t1 fließt damit ein linear ansteigender Strom I1 durch die Drossel L1 und über die Hilfsspule L2 auf den Kondensator C1. Ein Teil dieses Stromes I1 fließt dabei auch durch die Primärspule L3, um das an der Hilfsspule L2 durch diesen Strom I1 hervorgerufene Magnetfeld zu kompensieren.

Im Gegensatz zu dem Ausführungsbeispiel gemäß Figur 1 wird die Drossel somit bei leitendem Transistor T1 von einem Strom I1 durchflossen. Bei dem Beispiel gemäß Figur 3 kann die Spannung U1 gegenüber dem Beispiel in Figur 1 erheblich weiter absinken, bis die Spannung über der Drossel L1 zwischen dem Ausgang des Gleichrichters BR1 und dem Knoten N3 Null oder negativ wird und somit kein Stromfluss I1 mehr stattfinden kann.

Zum Zeitpunkt t2 sperrt der Transistor T1. Der Strom I2 durch die Primärspule L3 wird zu Null und die Sekundärspule L5 wird nun von einem zunächst abrupt ansteigenden Strom I3 durchflossen.

Die Spannung U4 über dem Transistor T1 steigt auf einen Wert an, der sich aus der Spannung U3 und einer in der Primärspule induzierten Spannung ergibt. Diese in der Primärspule L3 induzierte Spannung beträgt in Figur 4 beispielhaft etwa 200v, so dass die Spannung U4 etwa 600V beträgt. Wie bereits erläutert entspricht das Potential U2 an dem Knoten N3 wegen der induktiven Kopplung der Primärspule L3 und der Hilfsspule L2 dem Potential bzw. der Spannung U4 an dem Knoten N1. Dieses Potential U2 ist bei sperrendem Transistor T1 größer als die von dem Gleichrichter BR1 gelieferte Spannung U1. Die zuvor in der Drossel gespeicherte Energie wird nun wider abgegeben, was bis zu einem Zeitpunkt t3, zu dem die Drossel energiefrei wird, einen abfallenden Strom I1 hervorruft. Der abfallende Strom I1 durch die Drossel L1 und die Hilfsspule L2 bewirkt auch einen Anteil des Stromes I3 durch die Sekundärspule, um das durch den Strom I1 an der Hilfsspule L2 hervorgerufene Magnetfeld zu kompensieren. Der Strom I3 durch die Sekundärspule fällt dadurch schneller ab, als dies ohne Hilfsspule L2 der Fall wäre.

Nach dem Zeitpunkt t3, nach dem die Drossel energiefrei ist, steigt das Potential an dem Ausgang des Gleichrichters BR1 auf den Wert des Potentials U2 an. Ein Strom entgegen der in Figur 3 eingezeichneten Richtung wird durch die in dem Gleichrichter BR1 vorhandenen Dioden verhindert.

Der Strom durch die Sekundärspule L5 sinkt nach dem Zeitpunkt t3 weiter ab bis die Sekundärspule zum Zeitpunkt t4 energiefrei ist. Die Abfallgeschwindigkeit des Stromes verringert sich, da kein Magnetfeld mehr zu kompensieren ist, das durch den Strom I1 hervorgerufen wird.

Der Transistor T1 wird zum Zeitpunkt t4 wieder leitend angesteuert, wenn die Sekundärspule energiefrei ist. Eine diesbezügliche Information erhält die Ansteuerschaltung IC1 über die weitere Hilfsspule L4. Die Stromaufnahme dieser Hilfsspule L4 ist gering gegenüber den zuvor betrachteten Strömen und kann daher für die hier interessierende Betrachtung vernachlässigt werden.

Bei dem Netzteil gemäß Figur 3 fließt somit ein Strom I1 zwischen den Zeitpunkten t1 und t3, das heißt ab dem Einschalten des Transistors T1, obwohl der Momentanwert der Spannung U1 kleiner als die Spannung über dem Kondensator C1 ist. Die Dauer der Stromaufnahme ist damit gegenüber den Netzteilen, bei denen ein Gleichrichter direkt an einen Kondensator angeschlossen ist, verlängert.

Ein Stromfluss findet dabei immer dann statt, wenn der Momentanwert der Spannung U1, der zwischen Null und einem Scheitelwert periodisch schwankt, größer ist als der bei leitendem Transistor T1 über diesem anfallende Spannungsabfall U4, der maximal einige Volt beträgt. Bei einer Eingangsspannung U1 mit einem Scheitelwert von mehreren hundert Volt findet somit eine Stromaufnahme nur dann nicht statt, wenn die Eingangsspannung U1 im Bereich der Nulldurchgänge der sinusförmigen Spannung Vin sehr kleine Momentanwerte aufweist.

Die Spannung U1 ist auch in Figur 4 über einige Ansteuerperioden als konstant angenommen, wobei die Dauer T einer Ansteuerperiode in Figur 4 wie auch in Figur 2 veranschaulicht ist.

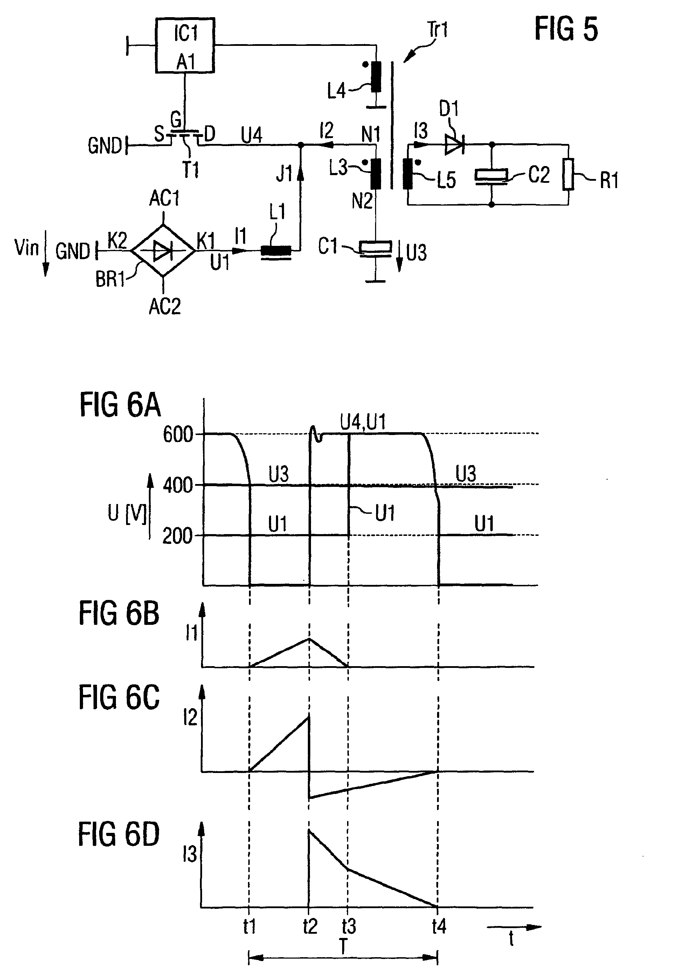

Figur 5 zeigt ein besonders einfach zu realisierendes Ausführungsbeispiel eines erfindungsgemäßen Netzteils. Bei diesem Netzteil ist anders als bei den Beispielen gemäß der Figuren 1 und 3 auf eine Hilfsspule verzichtet, die Drossel L1 ist stattdessen über die Primärspule L3 an den Kondensator C1 angeschlossen und zu diesem Zweck mit ihrem dem Gleichrichter BR1 abgewandten Anschluss an einen dem Transistor T1 und der Primärspule L3 gemeinsamen Knoten angeschlossen.

Bei dem Netzteil gemäß Figur 5 wird der Kondensator C1 bei Einschalten des Netzteils, das heißt bei Anlegen einer Versorgungsspannung Vin an den Gleichrichter BR1 über die Drossel und die Primärspule L3 auf den Scheitelwert der anliegenden Wechselspannung aufgeladen.

Die Funktionsweise dieses Netzteils ist im folgenden erläutert.

Zum Zeitpunkt t1 wird der Transistor leitend. Über der Primärspule liegt dann annäherungsweise die durch den Kondensator C1 hervorgerufene Spannung U3 an, die einen linear ansteigenden Primärstrom I2 (Figur 6b) hervorruft. Der dem Gleichrichter BR1 abgewandte Anschluss der Drossel L1 liegt über den leitenden Transistor T1 annäherungsweise auf Bezugspotential, so dass die an dem Ausgang des Gleichrichters BR1 anliegende Spannung U1 fast vollständig über der Drossel anliegt und einen linear ansteigenden Strom I1 (Figur 6a) hervorruft. Figur 6 zeigt lediglich einen kurzen Ausschnitt der Spannungsverläufe während einer Dauer von etwas mehr als einer Ansteuerperiode. Die Spannung U1 kann während dieser Dauer annäherungsweise als konstant angenommen werden und beträgt in Figur 6 beispielhaft 200V. Die Steilheit des Stromanstiegs des Stromes I1 ist von dem Momentanwert der Spannung U1 abhängig, die in nicht näher dargestellter Weise vorzugsweise sinusbetragförmig zwischen Null und einem Scheitelwert, der in etwa der Spannung U3 entspricht, variiert.

Zum Zeitpunkt t2 sperrt der Transistor. Das Potential U4 an dem Knoten N1 steigt an und resultiert aus der Summe der Spannung U3 und einer in der Primärspule L3 induzierten Spannung. Dieses Potential ist größer als das Potential U1 am Ausgang des Gleichrichters BR1. Der Strom I1 steigt dadurch nicht weiter an, sondern die Drossel L1 gibt die in ihr zuvor gespeicherte Energie bei absinkendem Strom I1 über die Primärspule an den Kondensator C1 ab. Die Primärspule wird dabei von einem Strom I2 durchflossen, der entgegengesetzt zu dem zuvor fließenden Strom ist, wie in Figur 6b dargestellt ist.

Zum Zeitpunkt t2 beginnt durch die Sekundärspule L5 ein Strom zu fließen. Dieser Strom besitzt einen Anteil, der durch die zuvor in der Primärspule L3 gespeicherte Energie hervorgerufen ist, und einen Anteil, der das durch den entgegengesetzt fließenden Strom I2 hervorgerufene Magnetfeld nach dem Zeitpunkt t2 kompensiert.

Die Drossel L1 ist zum Zeitpunkt t3, wenn der Strom I1 auf Null abgefallen ist, energiefrei. Zu diesem Zeitpunkt steigt das Potential U1 an dem Ausgang des Gleichrichters BR1 auf den Wert des Potentials U4 an, das größer als das Potential U1 am Ausgang des Gleichrichters BR1 ist. Ein Strom I1 entgegen der in Figur 5 eingezeichneten Richtung wird durch Dioden in dem Brückengleichrichter BR1 verhindert.

Nach dem Zeitpunkt t3 fließt weiter ein Strom I3 durch die Sekundärspule L5 bis die Primärspule L3 energiefrei ist, das heißt bis die darin gespeicherte Energie über die Sekundärspule L5 abkommutiert wurde.

Der Transistor T1 wird zu einem Zeitpunkt t4 oder nach diesem Zeitpunkt, nach dem die Primärspule L3 energiefrei ist, wieder leitend angesteuert.

Bei diesem Ausführungsbeispiel fließt ein Strom I1 zwischen Zeitpunkten t1 und t3 innerhalb einer Ansteuerperiode T in das Netzteil obwohl der Momentanwert der Spannung U1 kleiner ist als die Spannung über dem Kondensator C1.

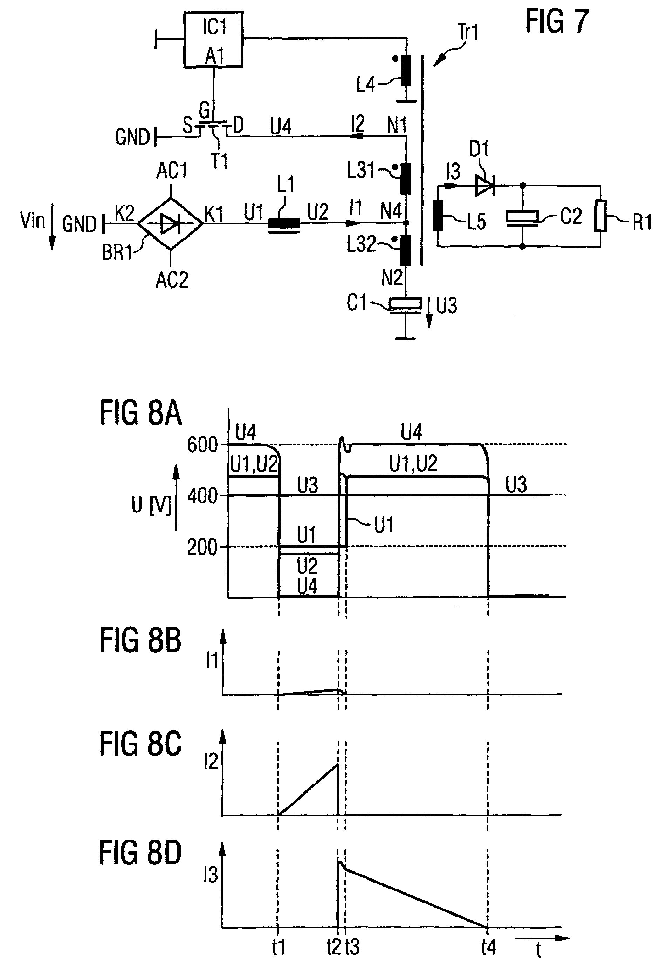

Figur 7 zeigt ein weiteres Ausführungsbeispiel eines erfindungsgemäßen Schaltnetzteils, bei dem die Drossel L1 über die Primärspule L31, L32 an den Speicherkondensator angeschlossen ist. Die Primärspule weist in dem Beispiel einen Anzapfpunkt N4 auf, an den die Drossel L1 angeschlossen ist. Die Drossel L1 ist dadurch über einen zwischen dem Anzapfpunkt N4 und dem Kondensator C1 liegenden Abschnitt L32 der Primärspule L31, L32 an den Kondensator C1 angeschlossen.

Leitet der Transistor T1 zum Zeitpunkt t1, so sinkt das Potential U4 an dem Knoten N1 annäherungsweise auf Bezugspotential bzw. die Spannung über dem Transistor T1 annäherungsweise auf Null ab. Die Primärspule L31, L32 wird von einem ansteigenden Primärstrom I2 durchflossen. Das Potential U2 an dem Knoten N4 liegt dabei um den Wert der über dem Anteil L31 der Primärspule anliegenden Spannung über dem Wert des Potentials U4. Ist dieses Potential U2 kleiner als der Momentanwert der Spannung U1, wie in dem in Figur 8a dargestellten Beispiel, so wird die Drossel L1 von einem ansteigenden Strom I1 durchflossen. Die Anstiegsgeschwindigkeit dieses Stromes I1 ist von der Differenz zwischen den Potentialen U2 und U1 abhängig. Ist der Momentanwert der Spannung U1 kleiner als das Potential U2, so fließt kein Strom I1.

Der Transistor T1 sperrt zum Zeitpunkt t2. Das Potential U4 an dem Knoten N1 steigt dann auf einen Wert an, der sich aus der Spannung U3 und der in der Primärspule induzierten Spannung ergibt. Das Potential U2 an dem Knoten N4 bleibt um den Wert der über dem Anteil L31 der Primärspule anliegenden Spannung unter dem Potential U4. Die Drossel gibt ihre Energie ab dem Zeitpunkt t2 ab, wobei der Strom I1 absinkt. Ab dem Zeitpunkt t2 fließt ein Strom durch die Sekundärspule L5, der wie bei dem Beispiel gemäß der Figuren 5 und 6 einen durch die Energie in der Primärspule L31, L32 und einen durch den Strom I1 hervorgerufenen Anteil aufweist.

Die Drossel L1, in der in dem Beispiel gemäß der Figuren 7 und 8 im Vergleich zu dem Beispiel gemäß der Figuren 5 und 6 nur wenig Energie gespeichert wurde, ist zu dem Zeitpunkt t3 energiefrei. Der Strom Il wird dann zu Null und das Potential an dem Ausgang des Gleichrichters BR1 steigt auf den Wert des Potentials U2 an, das größer ist das Potential U1 an dem Ausgang des Brückengleichrichters. Ein Strom entgegen der in Figur 7 eingezeichneten Richtung fließt wegen der in dem Gleichrichter vorhandenen Dioden nicht. Die Sekundärspule L5 wird bis zu einem Zeitpunkt t4 von einem Strom durchflossen, bei dem der Transformator Tr1 energiefrei wird. Der Transistor T1 wird zu dem Zeitpunkt t4 oder danach wieder eingeschaltet.

Auch bei diesem Ausführungsbeispiel der Erfindung kann das Schaltnetzteil auch dann während bestimmter Zeitdauern Strom aufnehmen, zu denen die Eingangsspannung U1 kleiner ist als die über dem Kondensator C1 anliegende Spannung U3.

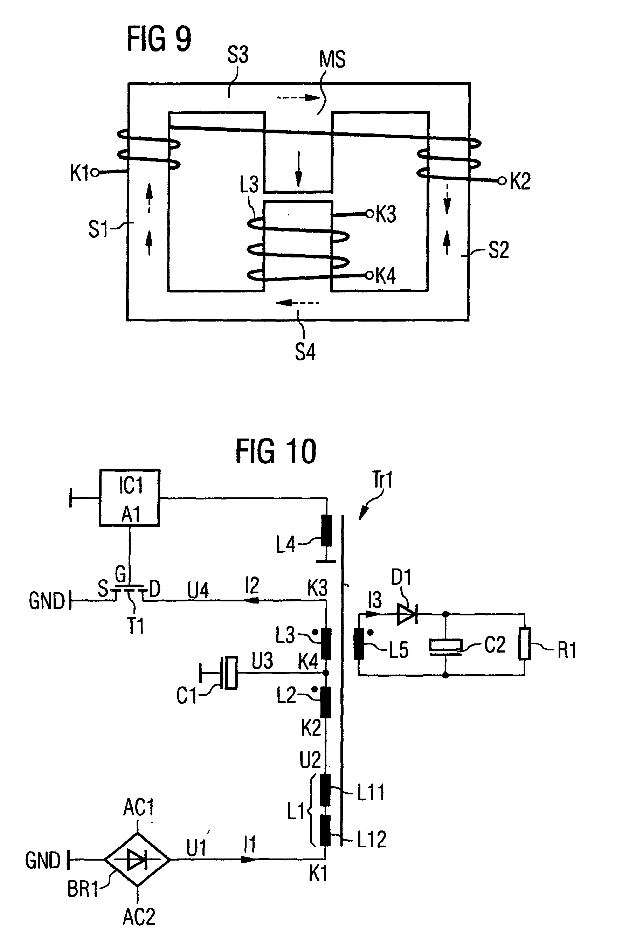

Figur 9 veranschaulicht eine besonders einfach zu realisierende Anordnung für den Transformator T1 und die Drossel L1 bei den zuvor beschriebenen Ausführungsbeispielen.

Die Anordnung weist einen Spulenkörper mit einem Mittelschenkel MS und zwei Seitenschenkeln S1, S2 auf, die über ein oberes Joch S3 und ein unteres Joch S4 miteinander verbunden sind und die insbesondere aus Ferrit bestehen. Die Transformatorspulen, von denen in Figur 9 lediglich die Primärspule L3 dargestellt ist, sind in herkömmlicher Weise auf den Mittelschenkel MS des Spulenkörpers aufgewickelt. Erfindungsgemäß ist vorgesehen, auch die Drossel L1 auf den Spulenkörper aufzuwickeln, wobei ein Teil L11 der Drossel auf den ersten Seitenschenkel S1 und ein Teil L12 der Drossel auf den zweiten Seitenschenkel S2 aufgewickelt ist, wobei die Anzahl der Windungen des Drosselteils L11 auf dem ersten Seitenschenkel S1 der Anzahl der Windungen des Drosselteils L12 auf dem zweiten Seitenschenkel S2 entspricht und die Drosselteile bei Betrachtung der Seitenschenkel als Ringkern denselben Wicklungssinn besitzen.

Bei Anlegen einer Spannung zwischen Anschlussklemmen K1, K2 der Drossel L11, L12 wird in dem Spulenkörper S1-S4, MS, ein Magnetfeld induziert, dessen Richtung in Figur 9 durch die gestrichelten Pfeile dargestellt ist. Bei gleichen Windungszahlen des Anteils L11 und des Anteils L12 der Drossel heben sich das durch den Anteil L11 hervorgerufene Magnetfeld und das durch den Anteil L12 hervorgerufene Magnetfeld in dem Mittelschenkel MS auf. In der Primärwicklung L3 des Transformators wird somit keine Spannung durch das durch die Drossel L11, L12 hervorgerufene Magnetfeld induziert. Bei Anlegen einer Spannung zwischen den Anschlussklemmen K3, K4 der Primärspule wird in dem Spulenkörper ebenfalls ein Magnetfeld induziert, wobei dieses Magnetfeld durch die in Figur 9 durchgezogenen gezeichneten Pfeile dargestellt ist. Dieses Magnetfeld induziert sowohl in dem Anteil L11 als auch in dem Anteil L12 der Drossel eine Spannung, wobei diese Spannungen entgegengesetzt gepolt sind, so dass zwischen den Anschlussklemmen K1, K2 der Drossel keine Spannung aus dem Magnetfeld der Primärspule L3 resultiert. Die Primärspule L3 und gegebenenfalls weitere auf den Mittelschenkel MS aufgewickelte Spulen des Transformators und die Drossel L11, L12 sind somit magnetisch entkoppelt.

Die in Figur 9 dargestellte Anordnung ist auf einfache Weise dadurch realisierbar, dass bei einem Transformator, der üblicherweise einen Spulenkörper mit einem Mittelschenkel und zwei Seitenschenkeln aufweist, die Drossel gleichmäßig aufgeteilt auf die Seitenschenkel aufgewickelt wird.

Figur 10 zeigt das Schaltbild eines Netzteils gemäß Figur 1, bei welchem eine Anordnung gemäß Figur 9 zur Realisierung des Transformators Tr1 und der Drossel verwendet ist. Die Drossel L1 ist in Figur 10 als aus zwei Spulen L11, L12 gebildet dargestellt, deren eine Anschlussklemme K1 an den Brückengleichrichter B1 und deren andere Anschlussklemme K2 an eine Hilfsspule L2 angeschlossen ist, die in Figur 9 nicht explizit dargestellt ist.

Bezugszeichenliste

| AC1, AC2 | Wechselspannungseingänge des Brückengleichrichters |
| AK1, AK2 | Ausgangsklemmen |
| BR1 | Brückengleichrichter |
| C1 | Kondensator |
| C2 | Kondensator |
| D | Drain-Anschluss |
| D1 | Diode |
| G | Gate-Anschluss |
| GND | Bezugspotential |
| I1 | Strom durch die Drossel |
| I2 | Strom durch die Primärspule |
| IC1 | Ansteuerschaltung |
| K1, K2 | Ausgänge des Brückengleichrichters |
| K1, K2 | Anschlussklemmen der Drossel |
| K3, K4 | Anschlussklemmen der Primärspule |
| L1 | Drossel |
| L2 | Hilfsspule |
| L3 | Primärspule |
| L4 | Hilfsspule |
| L5 | Sekundärspule |
| L11, L12 | Teile der Drossel |
| MS | Mittelschenkel |
| N1, N2 | Schaltungsknoten |
| N3, N4 | Schaltungsknoten |
| R1 | Last |
| S | Source-Anschluss |
| S1, S2 | Seitenschenkel |

S3          oberes Joch
S4          unteres Joch
T1          Transistor
Tr1         Transformator
U1          Spannung am Ausgang des Brückengleichrichters
U2          Spannung am Knoten
U3          Spannung über dem Kondensator
U4          Spannung über dem Transistor
Vin         Wechselspannung
Vout        Ausgangsspannung

**Patentansprüche**

1.  Spannungswandler, der folgende Merkmale aufweist:

    -   eine Gleichrichteranordnung (BR1) mit Eingangsklemmen (AC1, AC2) zum Anlegen einer
        Wechselspannung (Vin) und Ausgangsklemmen zum Bereitstellen einer gleichgerichteten
        Spannung (U1),

    -   eine Ladungsspeicheranordnung (C1),

    -   eine Reihenschaltung mit einem Halbleiterschalter (T1) und einer Primärspule (L3) eines
        Übertragers (Tr1), die parallel zu der Ladungsspeicheranordnung (C1) geschaltet ist,

    -   einen Sekundärstromkreis mit einer Sekundärspule (L5) des Übertragers (Tr1) und mit Ausgangsklemmen (AK1, AK2) zum Bereitstellen
        einer Ausgangsspannung (Vout),

    -   eine Ansteuerschaltung (IC1) zur Ansteuerung
        des Halbleiterschalters (T1) abhängig von der
        Ausgangsspannung (Vout),

    **gekennzeichnet durch**

    -   eine Drossel (L1), die an einer der Ausgangsklemmen (der Gleichrichteranordnung (BR1)
        angeschlossen ist und die über eine induktiv
        mit der Primärspule (L3) gekoppelte Hilfsspule
        (L2) oder über die Primärspule (L3) an den
        Kondensator (C1) angeschlossen ist.

2.  Spannungswandler nach Anspruch 1, bei dem die
    Primärspule (L3) einen Anzapfpunkt (N4) aufweist,
    an den die Drossel (L1) angeschlossen ist.

3.  Spannungswandler nach Anspruch 1 oder 2, bei
    dem die Primärspule (L3) und die Hilfsspule (L2)
    denselben Wicklungssinn aufweisen.

4.  Spannungswandler nach Anspruch 1 oder 2, bei dem die Primärspule (L3) und die Hilfsspule (L2) einen entgegengesetzten Wicklungssinn aufweisen.

5.  Spannungswandler nach einem der vorangehenden Ansprüche, bei dem die Primärspule (L3) und
    die Hilfsspule (L2) dieselbe Windungszahl aufweisen.

6.  Spannungswandler nach einem der vorangehenden Ansprüche, der eine weitere induktiv mit der
    Primärspule (L3) gekoppelte Hilfsspule (L4) aufweist, die an die Ansteuerschaltung (IC1) angeschlossen ist.

7.  Spulenanordnung, die folgende Merkmale aufweist:

    -   einen Spulenkörper mit einem ersten und zweiten Seitenschenkel (S1, S2) und einem dazwischen liegenden Mittenschenkel (MS), die mittels eines oberen und unteren Joches (S3, S4)
        miteinander verbunden sind,

    -   einer ersten Spule (L11, L12), die teilweise auf
        den ersten Seitenschenkel (S1) und teilweise
        auf den zweiten Seitenschenkel (S2) gewickelt
        ist,

    -   wenigstens eine zweite Spule (L3), die auf den
        Mittenschenkel (MS) aufgewickelt ist.

8.  Verwendung einer Spulenanordnung nach Anspruch 6 in einem Spannungswandler nach einem
    der Ansprüche 1 bis 5 zur Realisierung der Primärspule (L3) bzw. des Transformators (Tr1) und der
    Hilfsspule (L2).

FIG 1

FIG 2A

FIG 2B

FIG 2C

FIG 3

FIG 4A

FIG 4B

FIG 4C

FIG 5

FIG 6A

FIG 6B

FIG 6C

FIG 6D

FIG 7

FIG 8A

FIG 8B

FIG 8C

FIG 8D

# FIG 9

# FIG 10